# EUROPEAN PATENT SPECIFICATION

(11) **EP 0 479 324 B1**
(45) Date of publication and mention of the grant of the patent: **29.07.1998**
(21) Application number: 91116999.3
(22) Date of filing: 04.10.1991
(51) Int. Cl.: H04N 5/232, H04N 5/14, H04N 5/217

(54) **Camera incorporating image shake detection and correction functions**
Kamera mit Bildzitterndetektion- und Korrekturfunktionen
Caméra incorporant des fonctions de détection et de correction des tremblements d'images

(30) Priority: 05.10.1990 JP 269256/90
(43) Date of publication of application: 08.04.1992
(73) Proprietor: YOZAN INC., Tokyo 155 (JP); SHARP CORPORATION, Osaka 545 (JP)
(72) Inventor: Murakami, Tetsuya, c/o SHARP CORPORATION, Abena-ku, Osaka 545 (JP); Takahama, Kengo, c/o SHARP CORPORATION, Abeno-ku, Osaka 545 (JP)
(74) Representative: Grünecker, Kinkeldey, Stockmair & Schwanhäusser Anwaltssozietät

(56) References cited:
- EP-A- 180 446
- EP-A- 262 926
- EP-A- 329 189
- EP-A- 348 207
- EP-A- 392 671
- US-A- 4 768 092
- PATENT ABSTRACTS OF JAPAN vol. 14, no. 259 (E-937)5 June 1990 & JP-A-2 079 584 ( NIPPON HOSO KYOKAI ) 20 March 1990
- PATENT ABSTRACTS OF JAPAN vol. 12, no. 268 (E-638)27 July 1988 & JP-A-63 051 785 ( MITSUBISHI ELECTRIC CORP. ) 4 March 1988
- PATENT ABSTRACTS OF JAPAN vol. 12, no. 256 (E-635)19 July 1988 & JP-A-63 042 288 ( KONIKA CORP. ) 23 February 1988
- PATENT ABSTRACTS OF JAPAN vol. 13, no. 371 (E-807)[3719]17 August 1989 & JP-A-1 125 064 ( MATSUSHITA ELECTRIC IND CO LTD ) 17 May 1989

## Description

### SPECIFICATION

### FIELD OF THE INVENTION

The present invention relates to a video system with a camera incorporated therein, particularly to a video system for preventing the shaking of its body.

### BACKGROUND OF THE INVENTION

When a video camera is used on moving body, such as a car, helicopter, etc., the displayed image shakes though the video-camera even when it is fixed to the moving body. As for a integrated system of video and camera ("movie", hereinafter), inputted image often shakes particularly in high zoom magnification when it is used with hands (not fixed).

Conventionally, shaking is limited by fixing a camera on a dumping stand for preventing shaking when a movie is used on moving body. In a movie, the visual range is changed in order to prevent shaking of an image by moving a lens in response to the output of an angler velocity sensor. In another type of movie, the shaking is compensated electrically by means of a memory for storing an image. The most typical electrical compensating manner for shaking is: i) individual circuits are provided for odd fields and even fields, respectively, ii)extracting a moving vector on a field, and iii) the following field is compensated to the field on which the moving vector is extracted.

Patent Abstracts of Japan, vol. 13, no 371(E-807)[3719], 17.06.89 & JP-A-01 125 064 discloses an image pick-up device compensating for image deterioration due to camera shake. Image signals are picked up by image pick-up elements and converted to digital signals by and A/D-converter. These digital signals are written into a memory and supplied to a "moving length detecting circuit" determining a motion vector using a representative point matching method. On the basis of this motion vector, read-out of data from the image memory is controlled.

### SUMMARY OF THE INVENTION

When a dumping stand for shaking is used, enjoyable or light-hearted usage of movie is impossible because the total size and weight of the instrument is rather big. When an angler velocity sensor is used for a movie, the size of the movie becomes large and the weight of it becomes heavy. Therefore, anyone cannot use it easily: that is, it is not practical. Using the electric compensation for an image of video movie deteriorates the quality of the image. When the information of moving vector is electrically extracted on an image, it is judged whether the image is on odd field or even field, and the moving vector is extracted by using field delay or so between successive odd/even fields. Since the circuits for odd field and even field are to be provided for extracting moving vector independently, a large scale circuit and a lot of electric power is necessary. Therefore, it cannot be applied for a small apparatus such as a movie.

The present invention has an object to provide a video system with a camera of simple structure, with small circuit which works by lower electric power. This object is achieved by claims 1 and 2.

### BRIEF DESCRIPTION OF THE DRAWINGS

Fig. 1 shows a block diagram of moving vector extracting portion.

Figs. 2 (a) and (b) show the representative points and searching area for calculating moving vectors.

Fig. 3 shows a block diagram of the structure for compensating shaking using field memories.

Fig. 4 shows the timing for writing and reading of data in field memories in Fig. 3.

Fig. 5 shows an embodiment for controlling the position of reading.

Fig. 6 shows a block diagram of a structure for compensation according to the moving vector in CCD.

### PREFERRED EMBODIMENT OF THE PRESENT INVENTION

Hereinafter, an embodiment of the present invention is described with referring to the attached drawings.

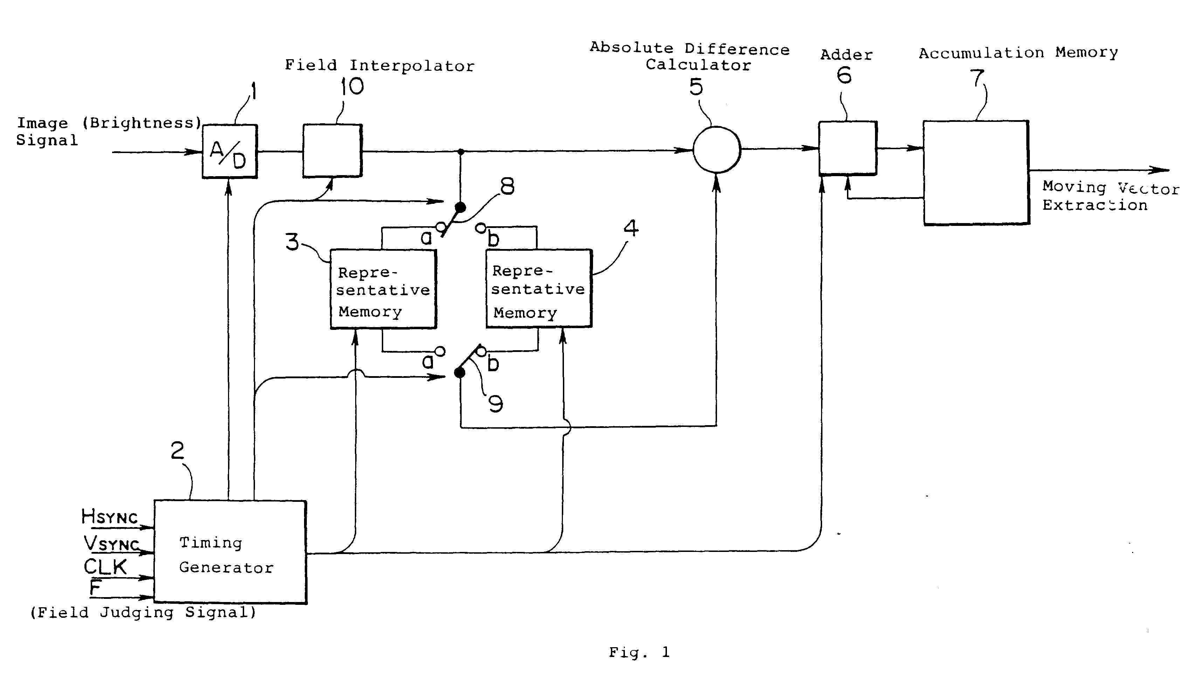

Fig. 1 shows the fundamental structure for extracting moving vector from sequential field information.

In this figure, "1" represents an A/D converter for converting analog signal into digital signal, "2" represents a timing generator for generating a clock for controlling the operation of A/D converter 1 and reading/writing of memories 3 and 4 for representative points, described later, according to an image signal and reference signal. 3 and 4 are the first and second representative point memories for storing a signal of brightness converted from analog to digital by A/D converter 1. The contents of a representative point memory is not transmitted to the other representative point memories. The information delayed by one vertical cycle is stored by switching of a circuit. That is, the signals of brightness delayed by one vertical cycle are stored in the first representative point memory 3 and the second representative point memory 4.

"5" represents an absolute difference calculator for calculating the absolute value of the difference between the data converted into digital value and the output data of representative point memory 4. "6" represents an adder for adding the value of brightness in every searching area. "7" is an accumulation memory for accumulating and recording the value of addition in adder 6. "8" and "9" are switches which switch the switch contacts for every vertical cycles. "10" is a field interpolator.

The image inputted from CCD (photo device) not shown is converted to digital signal by A/D converter 1. The sampling on this A/D conversion is controlled by the clock generated by timing generator 2. The image signal converted to digital signal is inputted to field interpolator 10. Field interpolator 10 interpolates the image signal during odd field and it outputs the image signal as it is during even field. The "interpolation" here means calculation of mean value between the pixels on the corresponding position of successive 2 field lines. From the calculation, the pixel data on odd field is positioned in alignment with corresponding pixel on even field.

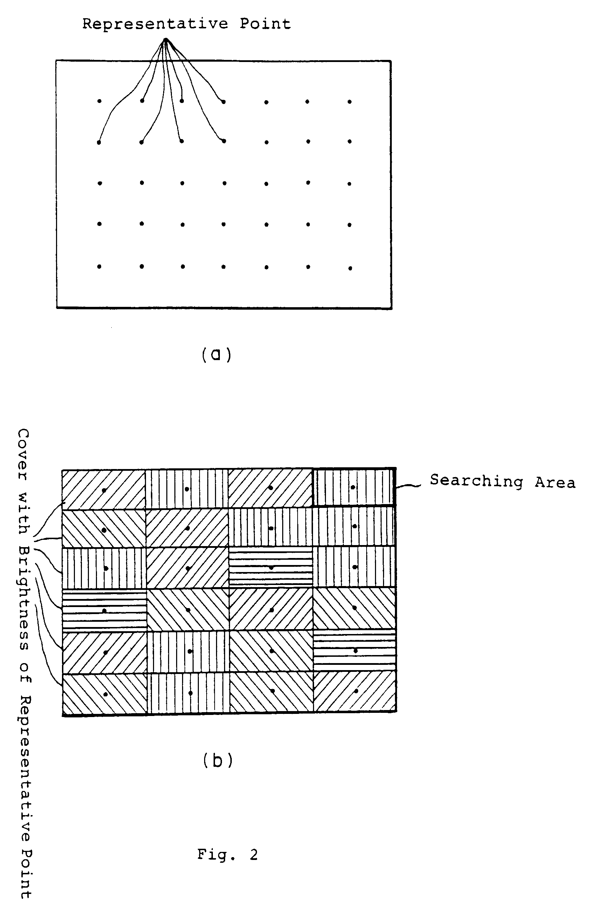

The data of the image signal passed through field interpolator 10 is inputted absolute difference calculator 5 and the first representative point memory 3. Representative point memory storages pixel data of search areas, as shown in Fig. 2 (a), each of which includes one representative point and field with density of the representative point. The search area is the area where the moving vector is searched. The representative points are decided in a frame memory beforehand (shown in Fig. 2 (a)). The number of the representative points is calculated according to the number of the pixels in a frame memory and the size of the search area of a moving vector. Here, the number of the representative points and the search area is determined so that the moving vector of each area becomes substantially equal to others.

It is assumed here that the data of brightness converted from analog to digital in A/D converter 1 is on odd field, for easy understanding. Then, switch 8 is on "a" terminal and switch 9 is on "b" terminal. Therefore, the data of brightness on odd field is stored on the first representative point memory 3. After one vertical cycle, switch 8 changes to "b" terminal and switch 9 changes to "a" terminal. Then, the data of brightness on even field is stored on the second representative memory 4. The data of brightness on odd field is read out from the first representative point memory 3 and it is inputted to absolute difference calculator 5. Since the brightness value of representative point is known on reading, only the brightness values of the representative points are outputted as the brightness value of points within the search areas.

In absolute difference calculator 5, the difference is calculated between the brightness value on even field newly inputted and the output data from representative point memory 3 (brightness value), then, the absolute value is calculated. The calculation of the absolute difference is performed for pixels on the corresponding positions of the even field and output data according to the clock signal sent from timing generator 2.

In adder 6, the value after the calculation is added to the data which is read out from accumulation memory 7 and stored again in accumulation memory 7. In the memory 7, the accumulated value of absolute difference is stored between the brightness data in the predetermined field and that in the field inputted after one vertical cycle time. The size of accumulation memory 7 is the same as the number of pixel data in search area (as in Fig. 2 (b)). The vector from the representative point to a point with the lowest brightness in the accumulation memory 7 represent the moving vector. The horizontal and vertical component of the vector is outputted. This method for calculating moving vector is called "representative point matching method". After one vertical cycle time, switches 8 and 9 change to the terminal "a" and "b", respectively. In the same way as above, the brightness on odd field is outputted from A/D converter 1 and that on even field is outputted from the second representative point memory 4. The absolute value of the difference between them is calculated in absolute difference calculator 5, and the value is accumulated and stored in accumulation memory 7. The moving vector is calculated in this way.

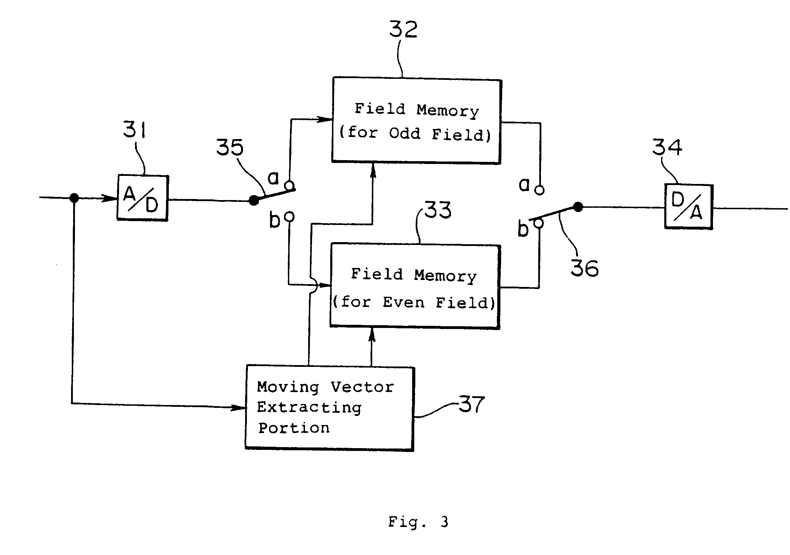

Fig. 3 shows the structure for compensating the shaking using field memories.

In this figure, "31" represents the A/D converter for converting input image signal into digital signal. "32" is a field memory for an odd field, and "33" for an even field. "34" is a D/A converter for converting image signal into analog signal for regenerating an image. "35" and "36" are switches changing terminals for every vertical cycle. "37" shows the moving vector extraction portion which comprises the same circuit as that in Fig. 1.

First, switches 35 and 36 are switched on "a" side and "b" side, respectively. The brightness data of an image signal on odd field is converted in A/D converter 31 and the converted data is stored in field memory 32. Field memory 33 is read out at the same time. Next, switches 35 and 36 are switched to the terminal "b" and "a", respectively, and the brightness on even field is inputted to field memory 33. The brightness on odd field stored previously in field memory 32 is read out without compensation, because the moving vector is then being calculated in moving vector extraction portion 37.

After that, switches 35 and 36 are switched again to "a" side and "b" side, respectively, and the brightness on odd field is stored in field memory 32. Then, the brightness on even field stored in field memory 33 is read out with compensation, by adjusting the reading out point by the distance according to the moving vector calculated in moving vector extracting portion 37. The compensated brightness is outputted through D/A converter 34, and consequently, the compensated image is recorded and regenerated.

Shakingless image can be obtained by repeating such compensation according to the moving vector.

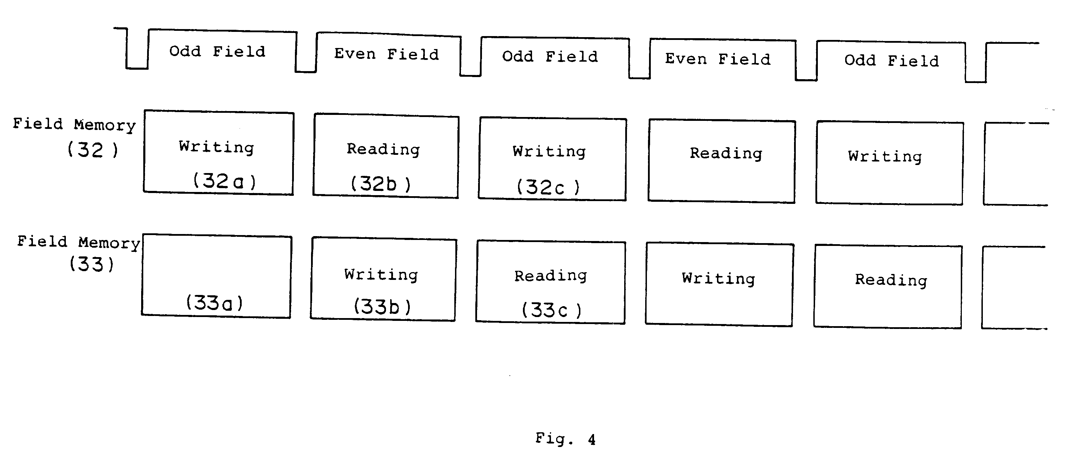

Fig. 4 shows the timing chart of writing and reading of data of field memories.

In the period 32a, the data on the first odd field is written in field memory 32. On this time, nothing is recorded in 33a. Next in 33b, the data of even field is written in field memory 33. At the same time, in 32b, data stored in field memory 32 before one vertical cycle time is read out, with shifting the read out point according to the movement vector outputted from the vector extraction portion 37. The next data of odd field is recorded on field memory 32 in 32c, and is read out from field memory 33 after compensation in 33c. Shakingless image can be obtained from successive field information by repeating such compensation.

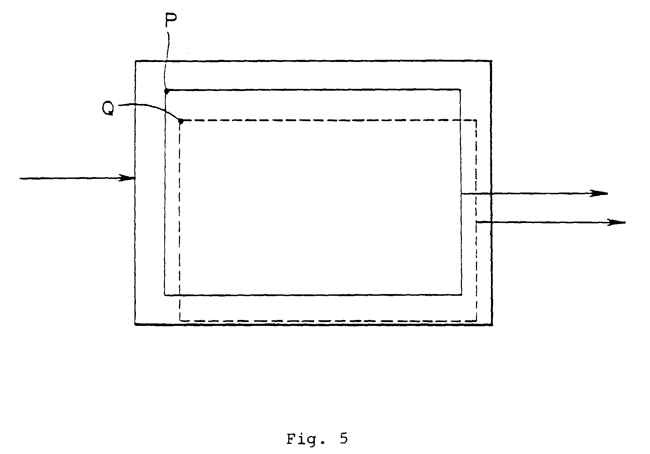

Fig. 5 shows a practical example for compensating the location of reading out memory. Without moving vector, reading out of pixel data is started, for example, from the point "P" and scanned in horizontal direction. When moving vector exists, reading out of the pixel data is started, for example, from the point "Q" after the compensation by the value of the moving vector.

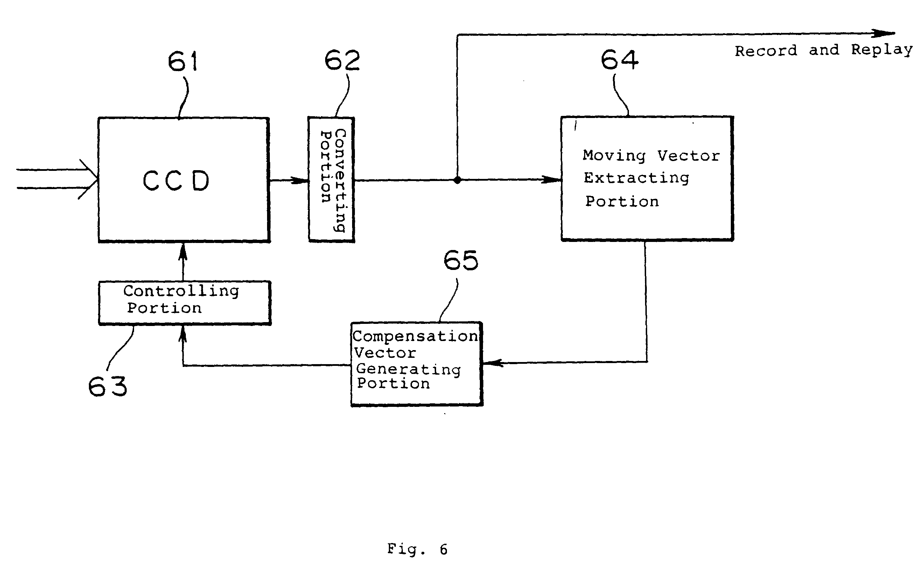

Fig. 6 shows a structure for compensating shaking of CCD according to the moving vector.

In this figure, "61" represents a device CCD for receiving light from lens so as to change the light information into electric signal. "62" is a converting portion for converting the signal from CCD into image signal. "63" is a CCD control portion for controlling clock read out from CCD 61. "64" is a moving vector extracting portion consisting of the circuit shown in Fig. 1. "65" is a compensation vector generating portion, which controls the position from where CCD starts to read out, according to the information from moving vector extracting portion 64.

The signal outputted from CCD 61 is converted into an image signal in converting portion 62. It is recorded and regenerated, as well as inputted to moving vector extracting portion 64. Image signal of two fields is inputted to moving vector extracting portion 64, and a moving vector is extracted. In compensation vector generating portion 65, the optimal compensating value is calculated according to the moving vector extracted in moving vector extracting portion 64 and to the moving vector sent from moving vector extracting portion 64 in the previous cycle. The compensating value is inputted to CCD controlling portion 63, and the reading out position of CCD 61 is changed and shaking is compensated. A compensated natural image without shaking can be obtained through it.

As mentioned above, moving vector extracting circuits have not to be set independently for off field and even field. Therefore, we can obtain a video system united with camera with simple structure, small circuit and for saving electric power.

## Claims

1. A video system comprising:
a camera (61) for scanning an image and outputting corresponding analogue signals;
first A/D converter means (31) for converting the analogue signals into digital data of even field and odd field;
first and second storing means (32, 33) for storing said digital data of even field and odd field;
moving vector extraction means including second A/D converter means (1) for converting the brightness signal part of the analogue signal provided by the camera (61) into brightness digital data,
interpolating means (10) for receiving an output from said second A/D converter means means for generating during odd fields, a field consisting of interpolated data, said interpolated data being generated by calculating the average brightness value of corresponding pixels on two successive field lines,
a first and a second representative point memory (3, 4) receiving the output of said interpolating means (10), said first representative point memory (3) being for storing brightness digital data of representative points of even fields and said second representative point memory (4) being for storing brightness digital data of representative points of odd fields, or said first representative point memory (3) being for storing brightness digital data of representative points of odd fields and said second representative point memory (4) being for storing brightness digital data of representative points of even fields, difference calculation means (5) for calculating an absolute difference between brightness data of a current field output by the interpolating means (10) and the representative point data of the preceeding field as stored in the first or second representative point memory respectively and means (6, 7, 37) for calculating a moving vector based on the absolute difference supplied by the difference calculating means and for reading out alternately the content of the first and second storing means (32, 33), whereby the read out starting point for even fields is shifted in accordance with the calculated moving vector, and
means for recording or reproducing a compensated image based on the content of the compensated even and odd field data.

2. A video system comprising:
a camera comprising CCD-means (61) for converting received light into electrical signals, conversion means (62) for converting the signals from the CCD-means into image signals,
a moving vector extraction means (64) for generating moving vector information in accordance with the signals provided by the conversion means,
a compensation vector generating and controlling portion (65, 63) for controlling, in accordance with the moving vector signal generated by the moving vector extracting portion (64) during the even fields, the starting point, from where the CCD-means read out,
wherein said moving vector extraction means includes an A/D converter means (1) for converting the brightness signal of the signal provided by the conversion portion (62) into brightness digital data,
interpolating means (10) for receiving an output from said first A/D converter means for generating during odd fields a field consisting of interpolated data, said interpolated data being generated by calculating the average brightness value of corresponding pixels on two successive field lines,
a first and a second representative point memory (3, 4), receiving the output of said interpolating means (10), said first representative point memory (3) being for storing brightness digital data of representative points of even fields and said second representative point memory (4) being for storing brightness digital data of representative points of odd fields said first representative point memory (3) being for storing brightness digital data of representative points of odd fields and said second representative point memory (4) being for storing brightness digital data of representative points of even fields, difference calculation means (5) for calculating the absolute difference between brightness data of a current field output by the interpolating means (10) and the representative point data of the preceeding field as stored in the first or second representative point memory respectively and means (6, 7) for calculating a moving vector based on the absolute difference applied by the difference calculating means and for providing said moving vector to said compensation vector generating and controlling portion.

## Patentansprüche

1. Ein Videosystem, mit:
einer Kamera (61) zum Abtasten eines Bildes und zum Ausgeben eines entsprechenden analogen Signals;
einer ersten A/D-Wandlereinrichtung (31) zum Wandeln des analogen Signals in digitale Daten von geraden und ungeraden Feldern;
ersten und zweiten Speichereinrichtungen (32, 33) zum Speichern der digitalen Daten von geraden und ungeraden Feldern;
einer Bewegungsvektorextrahierungseinrichtung, welche eine zweite A/D-Wandlereinrichtung (1) aufweist zum Wandeln des Helligkeitssignalanteils des analogen Signals, welches von der Kamera (61) bereitgestellt wird, in digitale Helligkeitsdaten;
einer Interpolationseinrichtung (10) zum Empfangen eines Ausgangssignals von der zweiten A/D-Wandlereinrichtung, um während ungerader Felder ein Feld bestehend aus interpolierten Daten zu erzeugen, wobei die interpolierten Daten durch Berechnung des durchschnittlichen Helligkeitswertes von entsprechenden Pixeln auf zwei aufeinanderfolgenden Feldlinien erzeugt werden;
einem ersten und einem zweiten Ersatzpunktspeicher (3, 4), welche die Ausgangssignale der Interpolationseinrichtung (10) empfangen, wobei der erste Ersatzpunktspeicher (3) zur Speicherung von digitalen Helligkeitsdaten von Ersatzpunkten von geraden Feldern dient und der zweite Ersatzzeigerspeicher (4) zum Speichern von digitalen Helligkeitsdaten von Ersatzpunkten von ungeraden Feldern dient, oder
der erste Ersatzpunktspeicher (3) zum Speichern digitaler Helligkeitsdaten von Ersatzpunkten von ungeraden Feldern und der zweite Ersatzpunktspeicher (4) zum Speichern digitaler Helligkeitsdaten von Ersatzpunkten von geraden Feldern dient;
einer Differenzberechnungseinrichtung (5) zum Berechnen einer absoluten Differenz zwischen den Helligkeitsdaten eines aktuellen Feldes, welche von der Interpolationseinrichtung (10) ausgegeben werden und den Ersatzpunktdaten des vorangehenden Feldes, wie sie in dem ersten oder zweiten Ersatzpunktspeicher jeweils gespeichert sind;
Einrichtungen (6, 7, 37) zum Berechnen eines Bewegungsvektors auf Basis der absoluten Differenz, die von der Differenzberechnungseinrichtung bereitgestellt wird und zum abwechselnden Auslesen des Inhaltes der ersten und zweiten Speichereinrichtung (32, 33), wobei der Anfangspunkt des Auslesens für gerade Felder nach Maßgabe des berechneten Bewegungsvektor verschoben wird; und
Einrichtungen zum Aufzeichnen und Wiedergeben des kompensierten Bildes auf Grundlage des Inhaltes der kompensierten geraden und ungeraden Felddaten.

2. Ein Videosystem mit:
einer Kamera, welche CCD-Einrichtungen (61) aufweist zum Umwandeln von empfangenem Licht in elektrische Signale, Wandlereinrichtung (62) zum Wandeln des Signals der CCD-Einrichtung in Bildsignale;
eine Bewegungsvektorextrahierungseinrichtung (64) zum Erzeugen von Bewegungsvektorinformation entsprechend der Signale, die von der Wandlereinrichtung bereitgestellt werden;
einen Kompensationsvektorerzeugungs- und -steuerungsbereich (65, 63) zum Steuern des Startpunktes, von dem aus die CCD-Einrichtung ausliest, entsprechend dem Bewegungsvektorsignal, welches von der Bewegungsvektorextrahierungseinrichtung (64) während der geraden Felder erzeugt wird;
wobei die Bewegungsvektorextrahierungseinrichtung eine A/D-Wandlereinrichtung (1) aufweist zum Wandeln des Helligkeitsanteils des Signals, welches von der Wandlereinrichtung (62) bereitgestellt wird, in digitale Helligkeitsdaten;
eine Interpolationseinrichtung (10) zum Empfangen eines Ausgangssignals der ersten A/D-Wandlereinrichtung und zum Erzeugen eines Feldes, welches aus interpolierten Daten besteht während ungerader Felder, wobei die interpolierten Daten durch Berechnung des durchschnittlichen Helligkeitswertes von entsprechenden Pixeln auf zwei aufeinanderfolgenden Feldlinien erzeugt werden;
einem ersten und zweiten Ersatzpunktspeicher (3, 4), welche die Ausgangsdaten der Interpolationseinrichtung (10) empfangen, wobei der erste Ersatzpunktspeicher (3) zum Speichern von digitalen Helligkeitsdaten von Ersatzpunkten von geraden Feldern dient und der zweite Ersatzpunktspeicher (4) zum Speichern digitaler Helligkeitsdaten von Ersatzpunkten von ungeraden Feldern dient; und
einer Differenzberechnungseinrichtung (5) zum Berechnen der absoluten Differenz zwischen den Helligkeitsdaten eines aktuellen Feldes, welche von der Interpolationseinrichtung (10) ausgegeben werden und den Ersatzpunktdaten des vorausgehenden Feldes, wie sie jeweils in dem ersten oder zweiten Ersatzpunktspeicher gespeichert sind und Einrichtungen (6, 7) zum Berechnen eines Bewegungsvektors auf Grundlage der absoluten Differenz, wie sie von der Differenzberechnungseinrichtung bereitgestellt wird und zum Bereitstellen des Bewegungsvektors für den Kompensationsvektorerzeugungs- und -steuerungsbereich.

## Revendications

1. Système vidéo comprenant :
un appareil de prise de vue (61) pour balayer une image et pour sortir des signaux analogiques correspondants ;
des premiers moyens formant convertisseur analogique-numérique (A/D) (31) pour transformer les signaux analogiques en données numériques de trames paires et de trames impaires ;
des premiers et seconds moyens de stockage (32, 33) pour stocker lesdites données numériques de trames paires et de trames impaires ;
des moyens d'extraction de vecteur de déplacement comprenant des seconds moyens formant convertisseur analogique-numérique (1) pour transformer la partie formant signal de luminosité du signal analogique donné par l'appareil de prise de vue (61) en données numériques de luminosité,
des moyens d'interpolation (10) pour recevoir une sortie en provenance desdits seconds moyens formant convertisseur analogique-numérique pour produire, pendant les trames impaires, une trame constituée de données interpolées, lesdites données interpolées étant produites en calculant la valeur de luminosité moyenne des éléments d'image (pixels) correspondants sur deux lignes de trame successives,
des première et seconde mémoires de points représentatifs (3, 4) recevant la sortie desdits moyens d'interpolation (10), ladite première mémoire de points représentatifs (3) servant à stocker des données numériques de luminosité de points représentatifs de trames paires et ladite seconde mémoire de points représentatifs (4) servant à stocker des données numériques de luminosité de points représentatifs de trames impaires, ou ladite première mémoire de points représentatifs (3) servant à stocker des données numériques de luminosité de points représentatifs de trames impaires et ladite seconde mémoire de points représentatifs (4) servant à stocker des données numériques de luminosité de points représentatifs de trames paires, des moyens de calcul de différence (5) pour calculer une différence absolue entre des données de luminosité d'une trame courante, sorties par les moyens d'interpolation (10), et les données de points représentatifs de la trame précédente, telles que respectivement stockées dans la première ou dans la seconde mémoire de points représentatifs et des moyens (6, 7, 37) pour calculer un vecteur de déplacement sur la base de la différence absolue délivrée par les moyens de calcul de différence et pour lire, en alternance, le contenu des premiers et seconds moyens de stockage (32, 33), de sorte que le point de début de lecture pour les trames paires est décalé selon le vecteur de déplacement calculé, et
des moyens pour enregistrer ou pour reproduire une image compensée sur la base du contenu des données compensées de trames paires et impaires.

2. Système vidéo comprenant :
un appareil de prise de vue comprenant des moyens formant CCD (61) pour transformer la lumière reçue en signaux électriques, des moyens de transformation (62) pour transformer les signaux en provenance des moyens formant CCD en signaux d'image,
des moyens d'extraction de vecteur de déplacement (64) pour produire des informations de vecteur de déplacement selon les signaux donnés par les moyens de transformation,
une partie de production et de commande de vecteur de compensation (65, 63) pour commander, selon le signal de vecteur de déplacement produit par la partie d'extraction de vecteur de déplacement (64) pendant les trames paires, le point de début, à partir duquel les moyens formant CCD effectuent la lecture,
dans lequel lesdits moyens d'extraction de vecteur de déplacement comprennent des moyens formant convertisseur analogique-numérique (1) pour transformer le signal de luminosité du signal donné par la partie de transformation (62) en données numériques de luminosité,
des moyens d'interpolation (10) pour recevoir une sortie en provenance desdits premiers moyens formant convertisseur analogique-numérique pour produire, pendant les trames impaires, une trame constituée de données interpolées, lesdites données interpolées étant produites en calculant la valeur de luminosité moyenne des éléments d'image correspondants sur deux lignes de trame successives,
des première et seconde mémoires de points représentatifs (3, 4) recevant la sortie desdits moyens d'interpolation (10), ladite première mémoire de points représentatifs (3) servant à stocker des données numériques de luminosité de points représentatifs de trames paires et ladite seconde mémoire de points représentatifs (4) servant à stocker des données numériques de luminosité de points représentatifs de trames impaires, ou ladite première mémoire de points représentatifs (3) servant à stocker des données numériques de luminosité de points représentatifs de trames impaires et ladite seconde mémoire de points représentatifs (4) servant à stocker des données numériques de luminosité de points représentatifs de trames paires, des moyens de calcul de différence (5) pour calculer la différence absolue entre des données de luminosité d'une trame courante, sorties par les moyens d'interpolation (10), et les données de points représentatifs de la trame précédente, telles que respectivement stockées dans la première ou dans la seconde mémoire de points représentatifs et des moyens (6, 7) pour calculer un vecteur de déplacement sur la base de la différence absolue appliquée par les moyens de calcul de différence et pour donner ledit vecteur de déplacement à ladite partie de production et de commande de vecteur de compensation.
